(19) **Europäisches Patentamt / European Patent Office / Office européen des brevets**

(11) **EP 4 478 280 A1**

(12) **EUROPEAN PATENT APPLICATION**

(43) Date of publication:
**18.12.2024   Bulletin 2024/51**

(21) Application number: **24181718.8**

(22) Date of filing: **12.06.2024**

(51) International Patent Classification (IPC):
**G06T 5/60** *(2024.01)*      **G06T 5/70** *(2024.01)*

(52) Cooperative Patent Classification (CPC):
**G06T 5/70; G06T 5/60;** G06T 2200/04;
G06T 2207/10024; G06T 2207/20081;
G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **12.06.2023   US 202363472560 P**

(71) Applicant: **GOOGLE LLC**
**Mountain View CA 94043 (US)**

(72) Inventors:
• **JAMPANI, Varun**
  **Mountain View, 94043 (US)**
• **YAO, Chun-Han**
  **Mountain View, 94043 (US)**
• **RAJ, Amit**
  **Mountain View, 94043 (US)**
• **HUNG, Wei-Chih**
  **Taipei (TW)**
• **YANG, Ming-Hsuan**
  **Mountain View, 94043 (US)**
• **RUBINSTEIN, Michael**
  **Mountain View, 94043 (US)**
• **LI, Yuanzhen**
  **Mountain View, 94043 (US)**

(74) Representative: **Hau, Darren Jun Wai et al**
**Venner Shipley LLP**
**200 Aldersgate**
**London EC1A 4HD (GB)**

(54) **DIFFUSION-GUIDED THREE-DIMENSIONAL RECONSTRUCTION**

(57)    Methods, systems, and apparatus, including computer programs encoded on computer storage media, for editing images based on decoder-based accumulative score sampling (DASS) losses.

FIG. 1

## Description

CROSS-REFERENCE TO RELATED APPLICATION

This application claims the benefit of U.S. Provisional Application number 63/472,560, filed on June 12, 2024. The disclosure of the prior application is considered part of and is incorporated by reference in the disclosure of this application.

BACKGROUND

This specification relates to processing images using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

SUMMARY

This specification describes a system implemented as computer programs on one or more computers that performs image editing based on decoder-based accumulative score sampling (DASS) losses.

In some implementations, the system uses the DASS losses and a diffusion neural network to directly optimize an input image in order to apply an edit to the input image, e.g. to enhance or de-noise the input image. In other words, the system generates an output image by editing an input image using the DASS losses, i.e., either unconditioned or conditioned on a text description.

In some other implementations, the system uses the DASS losses and the diffusion neural network to adjust a differentiable renderer that generates the input image, i.e., by propagating the image space gradients backward through (the parameters of) the differentiable renderer. Once adjusted, the system or another system can use the differentiable renderer to edit the input image, i.e., to generate output images that are edited versions of the input image.

Particular embodiments of the subject matter described in this specification can be implemented so as to realize one or more of the following advantages. This specification describes a new diffusion-based scoring technique for (i) optimizing an image, e.g., a two-dimensional (2D) rendered image, or (ii) optimizing a parametric model, e.g., a differentiable renderer that includes one or more NeRF neural networks, to generate enhanced rendered images.

A system that uses the diffusion-based scoring technique described in this specification can leverage 2D diffusion priors as guidance to generate enhanced 2D rendered images of an object instance that have improved quality in both the reconstruction of 3D articulated shape and the texture of the object instance. Specifically, the system computes image space gradients from a multi-step diffusion process during which a diffusion neural network iteratively computes denoise outputs in a latent space to denoise a 2D rendered image, and incorporates the image space gradients in the optimization of the rendered image by using the denoised image as the target image.

Unlike some existing systems that backpropagate latent space gradients through an image encoder neural network to update the rendered image, the described system adopts a decoder-based multi-step approach to calculate more stable and less noisy gradient updates for rendered image optimization, and can hence generate enhanced 2D rendered images with more robust, detailed, and realistic (from both input and novel views) 3D reconstructions of various object instances, despite an optimization process that consumes fewer computational and memory resources. Advantageously, the system can accurately estimate the camera viewpoint, pose, shape, and texture of an object instance even with the presence of occlusion or truncation in the original images that depict the object instance.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a diagram of an example neural network system.
FIG. 2 is an example illustration of operations performed by a neural network system to edit an image using DASS losses.
FIG. 3 is a diagram of another example neural network system.
FIG. 4 is an example illustration of operations performed by a neural network system to adjust a differentiable renderer using DASS losses.
FIG. 5 is a flow diagram of an example process for editing an input image.
FIG. 6 is a flow diagram of sub-steps of one of the steps of the process of FIG. 5.

Like reference numbers and designations in the various drawings indicate like elements.

DETAILED DESCRIPTION

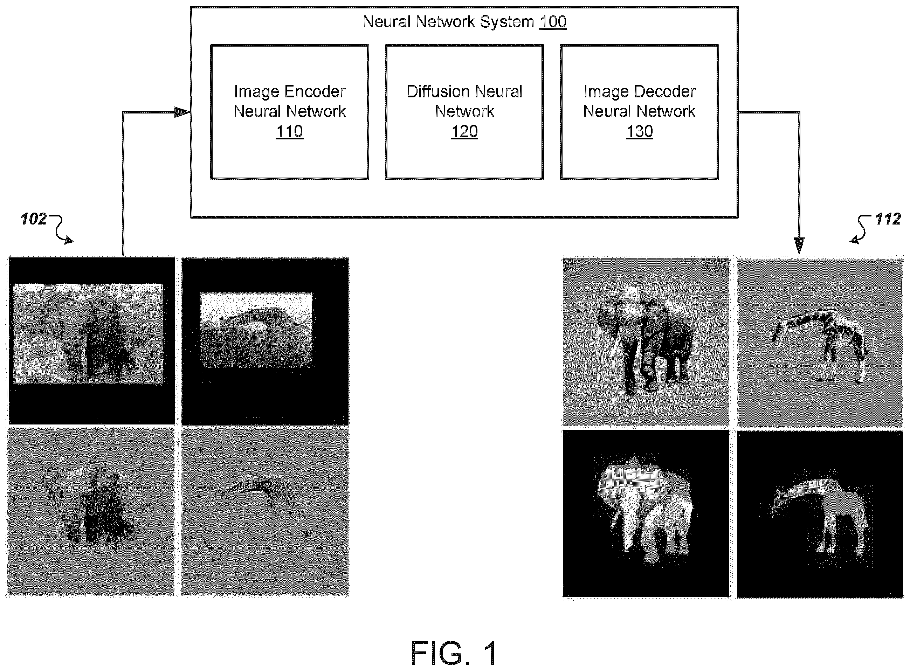

FIG. 1 is a diagram of an example neural network system 100. The neural network system 100 is an example of a system implemented as computer programs on one or more computers in one or more locations, in which the systems, components, and techniques described below can be implemented.

The neural network system 100 is a system that generates an output image by editing an input image using decoder-based accumulative score sampling (DASS) losses, i.e., either unconditioned or conditioned on a text description.

As shown in FIG. 1, in some implementations, the neural network system 100 uses the decoder-based accumulative score sampling (DASS) losses and a diffusion neural network 120 to directly optimize an input image 102 by applying edits to the input image 102.

In other words, the neural network system 100 generates an output image 112 by editing an input image 102 across multiple updating iterations using decoder-based accumulative score sampling (DASS) losses computed using the diffusion neural network 120.

FIG. 1 shows four example input images 102. The input images 102 are noisy images that each depict an animal. The animals depicted in the input images 102 have an ambiguous appearance caused by noisy texture, dim lighting, occlusions, or truncations that are present in the input images 102.

FIG. 1 also shows four example output images 112. Each output image 112 can be generated by the neural network system 100 from processing a corresponding input image 102. Each output image 112 is an enhanced (e.g., optimized) version of the corresponding input image 102 that includes a higher quality depiction of the animal depicted in the corresponding input image 102.

That is, the output image 112 and the input image 102 depict the same object instance (the same animal), but the quality of the output image 112 is higher than that of the input image 102, because the output image 112 depicts the object instance (animal) with a clearer appearance and includes less noise, fewer occlusions, fewer truncations, etc.

The diffusion neural network 120 can be any appropriate diffusion neural network that can perform a diffusion process in latent space, e.g., in a latent space that is lower-dimensional than an image space (or pixel space). That is, the images operated on by the diffusion neural network 120 are latent images and the values for the pixels of the images are learned, latent values rather than color values.

In particular, the diffusion neural network 120 can have been trained to receive a denoising input that includes an intermediate latent representation of the input image 102 and to process the input to generate a denoising output for the intermediate latent representation. In some implementations, the denoising input also includes a timestep that defines a noise level for the intermediate latent representation. In some implementations where the diffusion neural network 120 is configured as a text-conditioned diffusion neural network, the denoising input further includes data derived (generated) from a text prompt.

The diffusion neural network 120 is associated with an image encoder neural network 110 to encode images into the latent space and an image decoder neural network 130 that receives an input that includes a latent representation of an image and decodes the latent representation to reconstruct the image. For example, the image encoder neural network 110 and the image decoder neural network 130 can have been trained jointly on an image reconstruction objective, e.g., a VAE objective, a VQ-GAN objective, or a VQ-VAE objective.

The diffusion neural network 120 can generally have any appropriate neural network architecture.

For example, the diffusion neural network 120 can have a convolutional neural network architecture, e.g., a U-Net architecture, that has multiple convolutional blocks. As another example, the diffusion neural network 120 can have a Transformer neural network architecture that has a set of self-attention blocks (and/or a set of cross-attention blocks) and that processes the denoising input through the set of self-attention blocks (and/or the set of cross-attention blocks) to generate the denoising output. As another example, the diffusion neural network 120 can have a diffusion Transformer (DiT). As another example, the diffusion neural network 120 can have a universal vision Transformer (UViT) architecture.

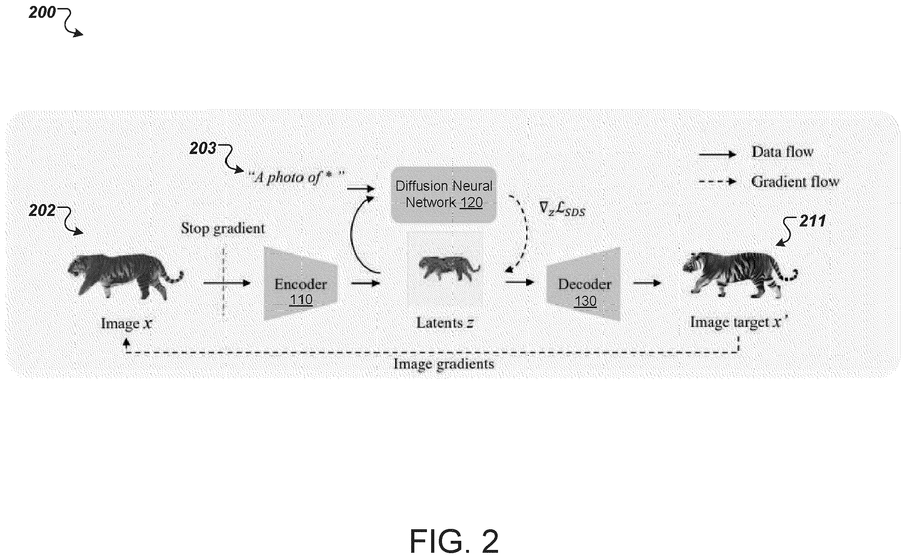

FIG. 2 is an example illustration 200 of operations performed by the neural network system 100 of FIG. 1 to edit an image using DASS losses. In the example of FIG. 2, the neural network system 100 uses the DASS losses computed using the diffusion neural network 120 to apply edits to an input image 202.

The neural network system 100 uses the image encoder neural network 110 to encode the input image 202 into a latent space, i.e., to process the input image 202 to generate an initial latent representation of the input image 202.

The neural network system 100 then updates the initial latent representation over n update iterations to generate an updated latent representation of the input image 202 by using the diffusion neural network 120 to generate a target image 211.

At each update iteration, the diffusion neural network 120 processes a denoising input that includes (i) an intermediate latent representation, (ii) a timestep that defines a noise level for the intermediate latent representation, and, optionally, when configured as a text-conditioned diffusion neural network, (iii) data derived from a text prompt to generate a denoising output from which an updated intermediate latent representation can be inferred.

The noise level typically depends on the timestep. For example, the noise level can be determined by computing a noise schedule function of timesteps t, e.g., a linear schedule function, a sigmoid schedule function, a cosine schedule function, or the like that is defined with reference to the timestep t.

The text prompt generally describes an output image to be generated by the neural network system 100 based on the input image 202. In the example of FIG. 2, the text prompt is: "A photo of *", where * represents animal species, e.g., zebra, tiger, giraffe, elephant, kangaroo, or penguin. In other examples, different text prompts can also be used.

In some implementations, n can be any positive integer greater than or equal to two, for example, between two and sixteen, or between three and ten. If the update iteration is the first update iteration in the n update iterations, the intermediate latent representation is the initial latent representation. For any subsequent update iteration, the intermediate latent representation is the updated intermediate latent representation that has been generated in the immediately preceding update iteration.

As part of processing the denoising input at the first update iteration, some implementations of the neural network system 100 can generate a noisy image from the input image 202, e.g., by sampling a noise from a noise distribution, e.g., a Gaussian noise distribution, and then add the sampled noise to at least a subset of the pixels, e.g., the background pixels, in the input image 202. A foreground pixel refers to a pixel in the input image 202 that is part of the object instance, and the background pixel refers to a pixel in the input image 202 that is not part of the object instance. Foreground and background pixels can be determined, e.g., by using an instance/semantic segmentation neural network or another segmentation algorithm to process the input image 202. The diffusion neural network thus processes (i) an initial latent representation generated from the noisy image, (ii) a timestep, and, optionally, (iii) data derived from a text prompt to generate a denoising output for the first update iteration.

For example, the denoising output generated by the diffusion neural network 120 can define an estimate of the noise that has been added to a latent representation of the target image in the latent space to arrive at the intermediate latent representation in the latent space, and thus the neural network system 100 can generate the updated intermediate latent representation by removing the estimated noise from the intermediate latent representation. In this way, at each update, the updated intermediate latent representation will generally be a less noisy version of the intermediate latent representation.

At each update iteration, the neural network system 100 evaluates a latent space objective function that measures a difference between (i) an estimate of the noise that is defined by the denoising output for the intermediate latent representation and (ii) a known noise included in the intermediate latent representation.

For example, the latent space objective function can be in the form of:

$$\mathcal{L}_{SDS} = \omega_t(\epsilon_\phi\left(z_t; y, t\right) - \epsilon)$$

where $z_t$ is the intermediate latent representation at a given time step t that includes a known noise $\epsilon$ that is dependent the given timestep t, y represents data derived (generated) from a text prompt, $\phi$ represents the diffusion neural network, $\varepsilon_\phi$ represents an estimate of the noise that is defined by the denoising output generated by the diffusion neural network, $\omega_t$ is a constant multiplier which depends on the given time step t that is optionally used to balance between the text guidance and the classifier-free guidance of an unconditional diffusion neural network.

At each update iteration, the neural network system 100 computes respective gradients of the latent space objective function with respect to the latent values included in the intermediate latent representation, and then determines an update to the intermediate latent representation based on the computed gradients of the latent space objective function.

For example, the gradients computed by the neural network system 100 can be in the form of $\nabla_z \mathcal{L}_{SDS}$, and the neural network system 100 can update the intermediate latent representation by adding or subtracting the gradients to the intermediate latent representation. Updating the intermediate latent representation based on the computed gradients of the latent space objective function is illustrated in FIG. 2 as the dashed arrow labeled "$\nabla_z \mathcal{L}_{SDS}$."

After having performed the *n* update iterations, the neural network system 100 processes the updated intermediate latent representation that is generated in the last update iteration in the *n* update iterations using the image decoder neural network 130 to generate a target image 211. That is, the neural network system 100 generates the target image 211 based on the updated final latent representation that is generated as a result of performing the *n* update iterations on the input image 202. As explained below, the target image 211 is generated in order to compute the gradients of an image space objective function for use to update the input image 202.

The neural network system 100 computes respective gradients of an image space objective function with respect to the color values of the input image 202. The image space objective function includes a decoder-based accumulative score sampling (DASS) loss term that measures a difference between (i) the input image 202 that is obtained prior to the *n* update iterations and (ii) the target image 211 that is generated as the result of the *n* update iterations.

For example, the image space objective function can be in the form of:

$$\mathcal{L}_{dass} = \left\|(x - \mathcal{D}(z - \nabla z))\right\|^2$$

where x is the input image 202, $\nabla_z$ represents an accumulation (e.g., sum) of the gradients of the latent space objective function with respect to the latent values over the $n$ update iterations, $z$ is the initial latent representation of the input image 202 that is generated by the image encoder neural network 110, and $D$ represents the image decoder neural network 130.

In particular, instead of computing the gradients of the image space objective function by way of explicitly calculating partial derivatives of the image space objective function with respect to the color values of the input image 202, the neural network system 100 can compute an approximation of the gradients of the image space objective function.

For example, the approximation of the gradients of the image space objective function that includes the DASS loss term can be computed as:

$$\nabla_x = x - x' = x - D(z - \nabla_z)$$

where $x'$ is the target image 211 where $x' = x - D(z - \nabla_z)$.

The neural network system 100 determines one or more updates to the input image 202 based on the computed gradients of the image space objective function, and then applies the updates to the input image 202 to generate an output image.

For example, the neural network system 100 can generate the output image by adding or subtracting the approximation of the gradients $\nabla_x$ to the input image 202. Updating the input image 202 based on the computed gradients of the image space objective function is illustrated in FIG. 2 as the dashed arrow labeled "image gradients."

The generated output image can be used in any of a variety of ways. For example, the neural network system 100 can then provide the output image as the edited version of the input image 202 for presentation on a computer, e.g., to a user who submitted the input image 202. Additionally or alternatively, the neural network system 100 can store the output image in a repository for future purposes.

Editing an image using the DASS loss term is different from and improves over existing approaches that update an input image by backpropagating image space gradients through the image encoder neural network. As an example of the existing approaches, the Score Distillation Sampling (SDS) approach (which is described in Poole, Ben, et al. "Dreamfusion: Text-to-3d using 2d diffusion." arXiv preprint arXiv:2209.14988 (2022)) involves computing the gradients of an image space objective function in the form of:

$$\nabla_x \mathcal{L}_{SDS} = \omega_t (\epsilon_\phi (z_t; y, t) - \epsilon) \partial z / \partial x$$

where $\partial z / \partial x$ represents the partial derivatives of the image space objective function with respect to the color values of the input image, and then backpropagating the gradients through the image encoder neural network at each update iteration in the n update iterations.

Despite the effectiveness of the SDS approach (which stems from the rich generative prior of the diffusion neural network it samples from), the image space gradients backpropagated through the image encoder neural network in the SDS approach are often noisy, causing undesirable artifacts on 3D shapes and texture. Moreover, the SDS approach requires extra computational and memory resource consumption for gradient backpropagation, limiting the training batch size and thus decreasing stability.

Advantageously, as described above with reference to FIG. 2, since the neural network system 100 applies updates to the input image 202 based on (the approximation of) the gradients of the image space objective function that includes a DASS loss term, the neural network system 100 needs only perform a single forward pass through the image encoder neural network 110 and the image decoder neural network 130. The neural network system 100 thus consumes approximately half the memory resource consumption when editing an input image compared to a system that adopts the SDS approach.

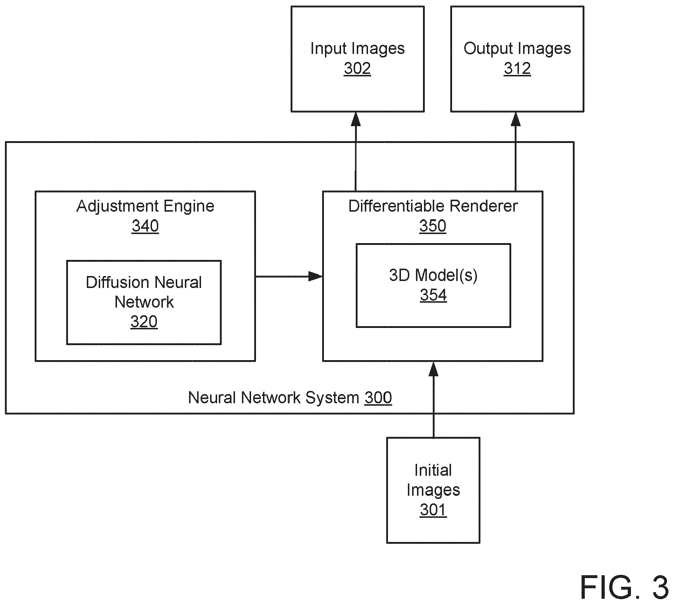

FIG. 3 is a diagram of another example neural network system 300. The neural network system 300 is an example of a system implemented as computer programs on one or more computers in one or more locations, in which the systems, components, and techniques described below can be implemented.

The neural network system 300 is a system that uses decoder-based accumulative score sampling (DASS) losses to adjust a differentiable renderer that generates an input image. Once adjusted, the neural network system 300 or another system can use the differentiable renderer to edit the input image, i.e., to generate output images that are edited versions of the input image.

As shown in FIG. 3, in some implementations, the neural network system 300 includes a diffusion neural network 320, an adjustment engine 340, and a differentiable renderer 350. The adjustment engine 340 within the neural network system 300 uses decoder-based accumulative score sampling (DASS) losses generated using the diffusion neural network 320 to adjust the parameters of the differentiable renderer 350.

The differentiable renderer 350 can be or include a three-dimensional (3D) rendering engine that is configured to receive a set of initial images 301 that each depict an object instance and to apply a 3D rendering process to generate, as an input image 302, a two-dimensional (2D) rendered image of the object instance in a scene. The object instance can be any of a variety of types of objects including landmarks, landscape or location features, vehicles, tools, food, clothing, devices, animals, human, to name just a few examples. In the 3D rendering process, the differentiable renderer 350 can generate one or more 3D models 354 of the object instance.

A 3D model 354 can include one or more features of the object instance that the model represents. In some examples, the 3D model can specify an identity of the object instance. The 3D model can also specify physical features of the object instance, e.g., the size, weight, mechanical elements, color, material, grasping features, etc.

There are many ways in which the differentiable renderer 350 can generate the one or more 3D models 354 based on the set of initial images 301. In some implementations, the 3D models 354 can include a 3D model that defines a 3D point cloud, voxel, or mesh representation of the object instance that is generated by the differentiable renderer 350 from the set of initial images 301 that each depict the object instance. The 3D model can utilize various 3D shapes (such as cubes, spheres, and cones) to directly define 3D geometry or 2D shapes (such as points, circles, rectangles, and triangles) to define facets of the 3D geometry.

In these implementations, the differentiable renderer 350 can use one or more point cloud, voxel, or mesh prediction neural networks to process the set of initial images 301 to generate output data that defines a 3D model. Examples of point cloud, voxel, or mesh prediction neural networks that can be used to generate such a 3D model include those described in Document Gkioxari et al., "Mesh R-CNN", Proceedings of the IEEE/CVF International Conference on Computer Vision, 2019, and Wu Jiajun, et al., "MarrNet: 3D shape reconstruction via 2.5D sketches", arXiv preprint, arXiv:1711.03129, 2017.

In some implementations, the 3D models 354 can include 3D models that define neural radiance field (NeRF) representations, e.g., neural surface representations, of one or more parts (or components) of the object instance that is generated by the differentiable renderer 350 from the set of initial images.

In these implementations, the differentiable renderer 350 can use one or more NeRF neural networks to process the set of initial images 301 to generate output data that defines the NeRF representations. For example, to define a NeRF representation, the output data can include one or more of: density data that describes an estimation of the density of the object instance, 3D shape data that describes the form of an outer surface of the object instance, texture data that describes characteristics of the outer surface of the object instance.

Examples of NeRF neural networks that can be used to generate such 3D models include those described in Chun-Han Yao, et al. "Hi-lassie: High-fidelity articulated shape and skeleton discovery from sparse image ensemble." Proceedings of the IEEE/CVF Conference on Computer Vision and Pattern Recognition. 2023, and Jason Zhang, et al. "NeRS: Neural reflectance surfaces for sparse-view 3D reconstruction in the wild." NeurIPS, 34, 2021.

After having generated the one or more 3D models 354, the differentiable renderer 350 can then generate, as the input image 302, the 2D rendered image of the object instance in accordance with the 3D models 354 by applying one or more differentiable rendering operations. In other words, the differentiable renderer 350 can generate the 2D rendered image without applying any discretization rendering operations, including the discrete sampling operation, called rasterization, which prevents the gradients to be flowed into the 3D models 354.

For example, the differentiable renderer 350 can apply at least some of the differentiable operations-e.g., the transform, color computation, probability computation and aggregate operations-that are described in Shichen Liu, et al., "Soft rasterizer: A differentiable renderer for image-based 3D reasoning." In CVPR, pages 7708-7717, 2019, the content of which is incorporated herein by reference.

As discussed further below, the adjustment engine 340 within the neural network system 300 then uses decoder-based accumulative score sampling (DASS) losses generated using the diffusion neural network 320 to adjust the parameters of the differentiable renderer 350 that generates the input image 302 through self-supervised learning. Because the operations are differentiable, the adjustment engine 340 is also able to adjust the one or more 3D models 354, as well as the parameters of the neural networks that generated the one or more 3D models 354. This makes the adjustments more effective.

Once adjusted, the neural network system 300 or another system can use the differentiable renderer 350 to edit the input image 302, i.e., to generate output images 312 that are enhanced (e.g., optimized) versions of the input image 302.

For example, the differentiable renderer 350 can generate, as an output image 312, an enhanced 2D rendered image of the object instance. That is, the output image 312 and the input image 302 are 2D rendered images of the same object instance, but the quality of the output image 312 is higher than that of the input image 302, because the output image 312 depicts the object instance with a clearer appearance and includes less noise, fewer occlusions, fewer truncations, etc.

In some implementations, the differentiable renderer 350 can generate multiple 2D rendered images that each have a different view of the same object instance. For example, the multiple 2D rendered images can be generated with respect to multiple different camera poses in the scene that includes the object instance, thereby resulting in the multiple views of the object instance.

In some implementations, the differentiable renderer 350 can generate a 3D model of an object instance to have a particular (e.g., user-specified) pose, a particular (e.g., user-specified) motion, a particular (e.g., user-specified) texture, or a combination thereof. In these implementations, by using the 3D model, the differentiable renderer 350 can generate 2D rendered images of the object instance that has the particular pose, the particular motion, the particular texture, or a combination thereof.

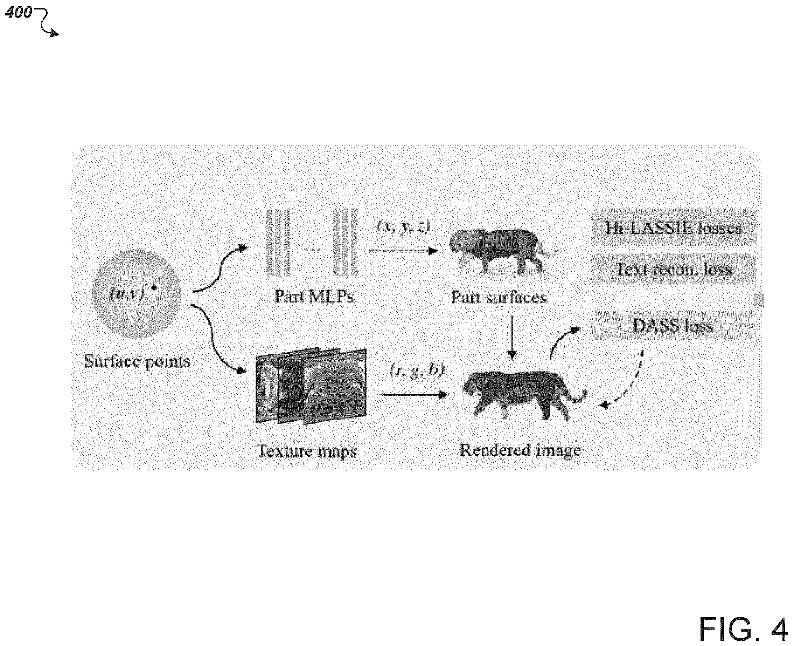

FIG. 4 is an example illustration 400 of operations performed by the neural network system 300 of FIG.

3 to adjust the differentiable renderer 350 using DASS losses. In the example of FIG. 4, the neural network system 300 uses the DASS losses and the diffusion neural network 320 to adjust the differentiable renderer 350 that generates the input image, i.e., by propagating the image space gradients backward through (e.g., the parameters of) the differentiable renderer.

As illustrated on the left-hand side of FIG. 4, the differentiable renderer 350 can generate, based on a set of initial images that depict an object instance, a neural radiance field (NeRF) representation of each of one or more parts of the object instance by using a corresponding NeRF model. The NeRF models that are used to generate the NeRF representations can each be implemented as a respective neural network, e.g., a multi-layer perceptron (MLP) model, a convolutional neural network, or the like, that has a plurality of parameters.

Specifically, a NeRF model can be configured to receive an input that includes or is derived from the set of initial images and to process the input to generate an output that includes one or more of (i) a set of volumetric density values that define a density estimation of the part of the object instance, (ii) a set of 3D shape values (e.g., x, y, z values that are mapped from on 3D surface points (u, v) on a unit sphere) that define the form of an outer surface of the part of the object instance, or (iii) a set of albedo values (e.g., r, g, b values that are mapped from on 3D surface points (u, v) on the unit sphere) that define a color estimation of the part of the object instance.

For each part of the object instance, the differentiable renderer 350 can then generate a corresponding NeRF representation based on the set of volumetric density values, the set of 3D shape values, the set of albedo values, or some combination thereof.

The differentiable renderer 350 can generate a set of 2D rendered images of the object instance in accordance with the NeRF representations by applying one or more differentiable rendering operations. For example, the operations can include the operations described in the "Soft rasterizer: A differentiable renderer for image-based 3D reasoning" reference mentioned above.

As illustrated on the right-hand side of FIG. 4, the neural network system 300 then uses the DASS losses and the diffusion neural network 320 to adjust the differentiable renderer 350 through self-supervised learning.

Adjusting the differentiable renderer 350 involves, for each 2D rendered image in the set of 2D rendered images that have been generated by using the differentiable renderer 350, generating an enhanced 2D rendered image that corresponds to the 2D rendered image by using the diffusion neural network 320, and then adjusting the parameters of the differentiable renderer 350 based on optimizing an image space objective function that includes at least a decoder-based accumulative score sampling (DASS) loss term.

The neural network system 300 can generate the enhanced 2D rendered images that correspond to the 2D rendered images by performing operations similar to those described above with reference to FIG. 2 (where the input image 202 is a 2D rendered image generated by using the differentiable renderer 350, and the target image 211 is a corresponding enhanced 2D rendered image).

More specifically, for each 2D rendered image in the set, the neural network system 300 first processes the 2D rendered image using an image encoder neural network to generate an initial latent representation of the 2D rendered image, updates the initial latent representation over n update iterations to generate an updated latent representation of the 2D rendered image by using the diffusion neural network 320, and then processes the updated intermediate latent representation that is generated in the last update iteration in the n update iterations using an image decoder neural network to generate the enhanced 2D rendered image that is an enhanced version of the 2D rendered image.

Then, the neural network system 300 determines one or more updates to the parameters of the differentiable renderer 350 by computing respective gradients of the image space objective function with respect to the parameters of the differentiable renderer 350 by backpropagation through the color values of a 2D rendered image that has been generated by the differentiable renderer 350.

The neural network system 300 then proceeds to update the parameters of the differentiable renderer 350 based on applying an update rule, e.g., an Adam update rule, an Rmsprop update rule, or a stochastic gradient descent (SGD) update rule, to the respective gradients. For example, the neural network system 300 can update the parameters of the NeRF model included in the differentiable renderer 350. As mentioned above, each NeRF model can be implemented as a respective neural network, thus updating the differentiable renderer involves updating the parameters of the respective neural networks.

In particular, for each 2D rendered image in the set, the image space objective function includes a decoder-based accumulative score sampling (DASS) loss term that measures a difference between (i) the 2D rendered image that is obtained prior to the n update iterations and (ii) the enhanced 2D rendered image that is generated as the result of the n update iterations.

Optionally, in some implementations, the image space objective function also includes one or more additional loss terms. For example, the image space objective function can include a texture reconstruction loss term that measures a difference between (i) the enhanced 2D rendered image of the object instance and (ii) a rendered RGB image of the object instance that has been generated based on a shape and texture estimation of the object instance.

Moreover, in this example, the difference in the texture reconstruction loss term can be masked by a foreground silhouette estimation of the object instance that has been generated by using a trained neural network, e.g., the vision Transformer (ViT) neural network as described in Mathilde Caron, et al. "Emerging properties in self-supervised vision transformers." In ICCV, pages 9650-9660, 2021.

For example, the texture reconstruction loss term can be computed as:

$$\mathcal{L}_{text} = \sum_j \|\hat{M}^j \odot (\hat{I}^j - \tilde{I}^j)\|^2$$

where $\hat{I}^j$ represents the enhanced 2D rendered image of the $j$th part of the object instance that is generated as the result of the $n$ update iterations and $\hat{M}^j$ denotes the foreground silhouette estimation; $\tilde{I}^j$ is the rendered RGB image; and $\odot$ represents element-wise product.

As another example, the image space objective function can also include a silhouette loss term that measures a difference between the foreground silhouette estimation of the object instance and a (pseudo) ground-truth foreground silhouette of the object instance. As another example, the image space objective function can also include a semantic consistency loss term which enforces the aggregated 3D point features to project closer to the similar pixel features in the 2D rendered images. As another example, the image space objective function can also include a part rotation loss term which limits the angle offsets of the object instance from its resting pose. As another example, the image space objective function can also include a mesh regularization loss which encourages smooth 3D surfaces by pulling each vertex towards the center of its neighbors. As another example, the image space objective function can also include a surface normal loss which encourages neighboring faces to have similar normals. More details of these loess terms that can possibly be included either alone or in combination in the image space objective function are described in more detail in the "Hi-lassie: High-fidelity articulated shape and skeleton discovery from sparse image ensemble" reference mentioned above.

For example, in some implementations, the image space objective function can be defined as a weighted sum of all of these loss terms:

$$\mathcal{L} = \sum_{l \in \mathfrak{L}} \alpha_l \mathcal{L}_l,$$

where $\mathfrak{L}$ = {*sil, sem, rot, lap, norm, text, dass*} where $\alpha$ is a vector having predetermined values that define the respective weights assigned to the various loss terms.

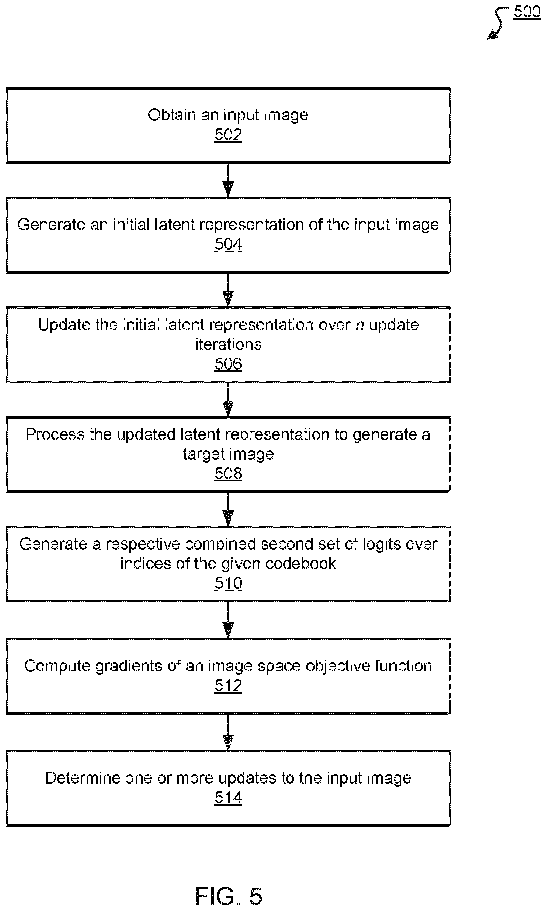

FIG. 5 is a flow diagram of an example process 500 for editing an input image. For convenience, the process 500 will be described as being performed by a system of one or more computers located in one or more locations. For example, a neural network system, e.g., the neural network system 100 depicted in FIG. 1 or the neural network system 300 depicted in FIG. 3, appropriately programmed in accordance with this specification, can perform the process 500.

The system obtains an input image (step 502). For example, the input image can be obtained as a user upload. As another example, the input image can be a 2D rendered image of an object instance that has been generated by a differentiable renderer from a set of initial images, e.g., a set of in-the-wild images, a set of noisy web images, and so on that depict the object instance.

The system uses an image encoder neural network to encode the input image into a latent space, i.e., to process the input image using the image encoder neural network to generate an initial latent representation of the input image (step 504).

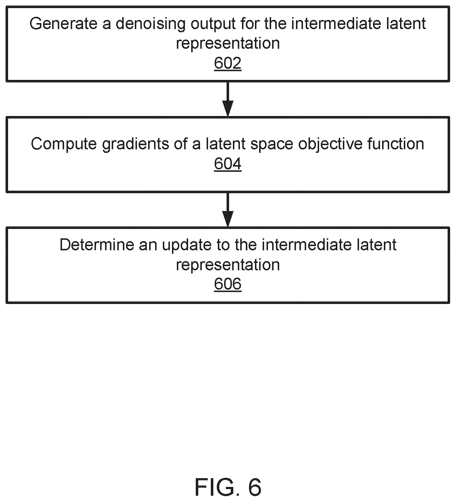

The system updates the initial latent representation by using a diffusion neural network over n update iterations to generate an updated latent representation of the input image (step 506), as discussed further below with reference to FIG. 6.

FIG. 6 is a flow diagram of sub-steps 602-606 of step 506 of the process of FIG. 5. The sub-steps 602-606 can be performed at each update iteration over the n update iterations. By repeatedly performing iterations of the sub-steps 602-606, the system can generate the updated latent representation of the input image.

The system processes a denoising input that includes (i) an intermediate latent representation, (ii) a timestep that defines a noise level for the intermediate latent representation, and, optionally, (iii) data derived from a text prompt using the diffusion neural network to generate a denoising output for the intermediate latent representation (step 602). For example, the denoising output generated by the diffusion neural network can define an estimate of the noise that has been added to a latent representation of a target image in the latent space to arrive at the intermediate latent representation in the latent space.

If the update iteration is the first update iteration in the n update iterations, the intermediate latent representation is the initial latent representation. For any subsequent update iteration, the intermediate latent representation is the updated intermediate latent representation that has been generated in the immediately preceding update iteration.

The system computes respective gradients of a latent space objective function with respect to the latent values included in the intermediate latent representation (step 604). The latent space objective function measures a difference between (i) the denoising output for the intermediate latent representation and (ii) a known noise included in the intermediate latent representation. For example, the known noise can be determined based on the timestep and on a time-dependent noise schedule.

The system determines an update to the intermediate latent representation based on the computed gradients of the latent space objective function (step 606). For example, the system can update the intermediate latent representation to generate the updated intermediate latent representation by adding or subtracting the gradients to the intermediate latent representation.

The system processes an updated final latent representation that is generated as a result of the n update iterations using an image decoder neural network to generate a target image (step 508). The updated final latent representation is the updated intermediate latent representation that is generated in the last update iteration in the *n* update iterations.

The system computes respective gradients of an image space objective function with respect to the color values (pixel values) of the input image (step 510). The image space objective function includes a decoder-based accumulative score sampling (DASS) loss term that measures a difference between (i) the input image that is obtained prior to the *n* update iterations and (ii) the target image that is generated as the result of the n update iterations. In some cases, instead of explicitly calculating partial derivatives of the image space objective function with respect to the color values of the input image, the system can compute an approximation of the respective gradients of the image space objective function. The target image for the DASS loss term can be generated based upon an accumulation of the gradients of the latent space objective function with respect to the latent values over the *n* update iterations. For example, the accumulated gradients can be subtracted from (or added to, as appropriate) the initial latent representation of the input image, the result of which can be provided to the decoder to generate the target image.

In some cases where the input image is a 2D rendered image that has been generated by a differentiable renderer, the image space objective function can include one or more additional loss terms, e.g., the texture reconstruction loss term and other loss terms mentioned above. Generally, inclusion of those addition loss terms can make the adjustments of the differentiable renderer more effective, e.g., in terms of computational resource consumption.

The system determines one or more updates to the input image based on the computed gradients of the image space objective function, and then applies the one or more updates to the input image to generate an output image (step 512). For example, the system can generate the output image by adding or subtracting the approximation of the gradients to the color values of the input image.

In some cases where the input image is a 2D rendered image that has been generated by a differentiable renderer, the system can also update the differentiable renderer based on backpropagating the respective gradients of the image space objective function through the color values of the 2D rendered image to the parameters of the differentiable renderer. For example, the system can update the parameters of one or more neural radiance field (NeRF) models included in the differentiable renderer, where each NeRF model can be implemented as a respective neural network, thus updating the differentiable renderer involves updating the parameters of the respective neural networks.

In some of these cases, after having updated the differentiable renderer by performing the process 500, the system can use the updated differentiable renderer to generate one or more three-dimensional (3D) models of an object instance based on the input image, and then generate multiple 2D rendered images in accordance with the 3D models. For example, the 3D models can include a 3D point cloud, voxel, or mesh representation of the object instance. As another example, the 3D models can include NeRF representations of one or more parts of the object instance. Such 3D representation can have a user-specified pose, a user-specified motion, a user-specified texture, or a combination thereof.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit).

The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow or JAX framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A method performed by one or more computers, the method comprising:

   obtaining an input image;
   processing the input image using an image encoder neural network to generate an initial latent representation of the input image;
   updating the initial latent representation over n update iterations to generate an updated latent representation of the input image, the updating comprising, at each update iteration:

   processing, using a diffusion neural network, a denoising input comprising an intermediate latent representation derived from the initial latent representation to generate a denoising output for the intermediate latent representation;
   computing a gradient of a latent space objective function that measures a difference between (i) the denoising output for the intermediate latent representation and (ii) a known noise included in the intermediate latent representation; and
   determining an update to the intermediate latent representation based on the computed gradient of the latent space objective function;

   processing the updated latent representation that is generated as a result of the n update iterations using an image decoder neural network to generate a target image;
   computing a gradient of an image space objective function that comprises a decoder-based accumulative score sampling (DASS) loss term that measures a difference between the (i) input image that is obtained prior to the n update iterations and (ii) the target image that is generated as the result of the n update iterations; and
   determining one or more updates to the input image based on the computed gradient of the image space objective function.

2. The method of claim 1, wherein n is an integer value greater than or equal to two.

3. The method of claim 2, wherein n is an integer value between three and ten.

4. The method of any one of claims 1-3, wherein the denoising output comprises a noise estimate of the intermediate latent representation.

5. The method of any one of claims 1-4, wherein the diffusion neural network is a pre-trained text-to-image diffusion neural network that operates on latent images.

6. The method of any one of claims 1-5, wherein the input image is a 2D rendered image of a target object instance, and wherein obtaining the image comprises:

   obtaining an initial image of the target object instance; and
   generating, from at least the initial image and by using a differentiable renderer, the 2D rendered image of the target object instance.

7. The method of claim 6, wherein generating the 2D rendered image of the target object instance comprises:

   sampling a random camera pose; and
   using the differentiable renderer to generate the 2D rendered image with respect to the sampled random camera pose.

8. The method of claim 7, wherein determining the one or more updates to the 2D rendered image comprises:

   updating the differentiable renderer based on backpropagating the gradient of the image space objective function through the 2D rendered image to the differentiable renderer.

9. The method of any one of claims 7-8, wherein the differentiable renderer comprises:

   a neural radiance fields (NeRF) model configured to generate (i) a set of volumetric density values that define a density estimation of the target object instance and (ii) a set of albedo values that define a color estimation of the target object instance, and
   a 2D renderer configured to generate the 2D rendered image based on the set of volumetric density values and the set of albedo values; and optionally

   wherein the NeRF model is a NeRF multi-layer perceptron (MLP) model, and wherein updating the differentiable renderer comprises updating parameter values of the NeRF MLP model.

10. The method of any one of claims 6-9, wherein the image space objective function also comprises a texture reconstruction loss term that measures a difference between (i) an enhanced image of the target object instance that has been generated by using the diffusion neural network from the input image and (ii) a rendered RGB image of the target object instance that has been generated based on a shape and texture estimation of the target object instance; and optionally wherein the difference in the texture reconstruction loss term is masked by a foreground silhouette estimation of the target object instance that has been generated by using a trained vision Transformer (ViT) neural network.

11. The method of claim 10, wherein generating the enhanced image by using the diffusion neural network from the input image comprises adding Gaussian noise to background pixels in the input image.

12. The method of any one of claims 6-11, further comprising:
    using the updated differentiable renderer to generate a three-dimensional (3D) representation of the target object instance based on the input image; and optionally
    wherein the 3D representation comprises a 3D voxel grid representation or a 3D mesh representation.

13. The method of claim 12, wherein the 3D representation of the target object instance has a user-specified pose, a user-specified motion, a user-specified texture, or a combination thereof.

14. A system comprising: one or more computers and one or more storage devices storing instructions that are operable, when executed by the one or more computers, to cause the one or more computers to perform operations of the respective method of any one of claims 1-13.

15. A computer storage medium encoded with a computer program, the program comprising instructions that are operable, when executed by data processing apparatus, to cause the data processing apparatus to perform operations of the respective method of any one of claims 1-13.

FIG. 1

FIG. 2

Input Images
302

Output Images
312

Neural Network System 300

Adjustment Engine
340

Diffusion Neural
Network
320

Differentiable Renderer
350

3D Model(s)
354

Initial
Images
301

FIG. 3

FIG. 4

500

```
┌─────────────────────────────────────────────┐
│           Obtain an input image              │
│                   502                        │
└─────────────────────────────────────────────┘
                      │
                      ▼
┌─────────────────────────────────────────────┐
│  Generate an initial latent representation   │
│            of the input image                │
│                   504                        │
└─────────────────────────────────────────────┘
                      │
                      ▼
┌─────────────────────────────────────────────┐
│  Update the initial latent representation    │
│            over n update iterations          │
│                   506                        │
└─────────────────────────────────────────────┘
                      │
                      ▼
┌─────────────────────────────────────────────┐
│  Process the updated latent representation   │
│         to generate a target image           │
│                   508                        │
└─────────────────────────────────────────────┘
                      │
                      ▼
┌─────────────────────────────────────────────┐
│  Generate a respective combined second set   │
│   of logits over indices of the given        │
│             codebook                         │
│                   510                        │
└─────────────────────────────────────────────┘
                      │
                      ▼
┌─────────────────────────────────────────────┐
│  Compute gradients of an image space         │
│          objective function                  │
│                   512                        │
└─────────────────────────────────────────────┘
                      │
                      ▼
┌─────────────────────────────────────────────┐
│  Determine one or more updates to the        │
│             input image                      │
│                   514                        │
└─────────────────────────────────────────────┘
```

FIG. 5

Generate a denoising output for the intermediate latent
representation
602

Compute gradients of a latent space objective function
604

Determine an update to the intermediate latent
representation
606

FIG. 6

| | Europäisches Patentamt European Patent Office Office européen des brevets | **EUROPEAN SEARCH REPORT** | Application Number EP 24 18 1718 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHUN-HAN YAO ET AL: "ARTIC3D: Learning Robust Articulated 3D Shapes from Noisy Web Image Collections", ARXIV.ORG, CORNELL UNIVERSITY LIBRARY, 201 OLIN LIBRARY CORNELL UNIVERSITY ITHACA, NY 14853, 7 June 2023 (2023-06-07), XP091532896, | 1-8, 10-15 | INV. G06T5/60 G06T5/70 |
| Y | * the whole document * | 9 | |
| Y | JASON Y ZHANG ET AL: "NeRS: Neural Reflectance Surfaces for Sparse-view 3D Reconstruction in the Wild", ARXIV.ORG, CORNELL UNIVERSITY LIBRARY, 201 OLIN LIBRARY CORNELL UNIVERSITY ITHACA, NY 14853, 14 October 2021 (2021-10-14), XP091078231, * abstract * * page 2, paragraphs 2,4 * * page 3, paragraph 6 * | 9 | |

| | | | TECHNICAL FIELDS SEARCHED (IPC) |
|---|---|---|---|
| | | | G06T |

The present search report has been drawn up for all claims

| Place of search | Date of completion of the search | Examiner |
|---|---|---|
| Munich | 7 October 2024 | Frias Velazquez, A |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 63472560

**Non-patent literature cited in the description**

• **POOLE, BEN et al.** Dreamfusion: Text-to-3d using 2d diffusion. *arXiv:2209.14988,* 2022
• **GKIOXARI et al.** Mesh R-CNN. *Proceedings of the IEEE/CVF International Conference on Computer Vision,* 2019
• **WU JIAJUN et al.** MarrNet: 3D shape reconstruction via 2.5D sketches. *arXiv:1711.03129,* 2017
• **CHUN-HAN YAO et al.** Hi-lassie: High-fidelity articulated shape and skeleton discovery from sparse image ensemble. *Proceedings of the IEEE/CVF Conference on Computer Vision and Pattern Recognition,* 2023
• **JASON ZHANG et al.** NeRS: Neural reflectance surfaces for sparse-view 3D reconstruction in the wild. *NeurIPS,* 2021, vol. 34
• **SHICHEN LIU et al.** Soft rasterizer: A differentiable renderer for image-based 3D reasoning. *CVPR,* 2019, 7708-7717
• **MATHILDE CARON et al.** Emerging properties in self-supervised vision transformers. *ICCV,* 2021, 9650-9660